# EUROPEAN PATENT APPLICATION

(11) **EP 1 256 886 A2**
(43) Date of publication of application: **13.11.2002**
(21) Application number: 01123443.2
(22) Date of filing: 28.09.2001
(51) Int. Cl.: G06F 17/30

(54) **Document delivery and classification system**

(30) Priority: 10.05.2001 EP 01111445
(71) Applicant: Siemens Dematic AG, 90475 Nürnberg (DE)
(72) Inventor: Frers, Gerold, 85560 Ebersberg (DE)
(74) Representative: Berg, Peter, Dipl.-Ing.

(57) **Abstract**

A method is set out for obtaining and classifying a document as well as routing the document to a select receiver. A document (14) is obtained (12) from a source (10) and provided with a mask (22) which has a plurality of classification terms (24). The classification may be based on legal or technical aspects (26) of the document (14). Appropriate classification term(s) (28) is selected (16) and a second document (32) is created comprising the old document with the selected terms. The second document may be stored locally (20) and distributed (30) to select enduser(s) (40). Enduser(s) (40) is then presented with several options including forwarding it to others (50), ordering a full text (52) depending upon the document format, and adding comments (54).

## Description

The present invention relates to a document delivery system and more particularly to a system and method for obtaining a document from a first source, classifying the document, making it available to an enduser in abstract form and providing the user with the option of obtaining a full version of the document.

Current document delivery systems operate on an order by order basis. In essence, an enduser makes a request from a service which provides the user with the document at a later time. In general there is little to no organization of the ordered documents, but for the individual efforts of the enduser. Where the delivery service services a larger organization with a sizeable volume of ordered documents, the lack of organization becomes burdensome. Not only will documents be ordered redundantly, but information and awareness of the content of the document will be imparted on the organization just from the mere fact that one within the organization had possession. Basically, when one person within the organization is aware of the document contents, technically the entire organization is charged with that knowledge. This can become especially problematic when the document has some legal significance as is the case with intellectual property (and patents in particular). In addition, larger organizations may lack the internal communication structure necessary to impart details of an ordered document. As such, after one person within the organization has ordered, used and set aside a document, the details of this document are lost to others within the organization. Therefore, a need exists to classify documents in association with their delivery into an organization.

It is an advantage of the present invention to provide a classification system layered atop a delivery system, for ordered documents by one person, wherein the document is available via the searchable classification system by another. It is a further advantage of the present system to provide a means for alerting another of deadlines associated with the document. It is a further advantage of the present system to provide a system that operates independently of the delivery system or classification system only, such that the instant system can be made available to others.

These and other advantages are realized by a classification system layered atop a delivery system. In operation, a document is ordered from a service. The document is downloaded in two formats. A first format has a classification system layered atop a cover page of the document. The second format comprises the document without the classification system. The first formatted document is routed to a classification unit which manually assigns one of the classification system options to the document. This may be accomplished by clicking or otherwise activating a particular box of the classification system. The classification system may be in ADOBE format and related to the technical attributions of the document. Once classified or rated, the first formatted document is routed into a mailing list. The second formatted document is configured into an e-mail format, has text added to it and added to the same mailing list as the first formatted document. The two formatted same document is then routed to the person making the initial order. The rating and order is stored in a separate database. The person making the original order then has the opportunity to review the document and classification. Where the ordered document is an abstract of a full text version, the person making the original order has the option of ordering the full text.

The invention will now be described by way of example and with reference to the accompanying drawings in which:
Figure 1 depicts a flow diagram of the present invention;
Figure 2 depicts a first ordered document;
Figure 3 depicts a second ordered document; and
Figure 4 depicts an e-mail generated by the present invention.

The present invention will be described wherein the ordered document is a patent abstract. The nature of the ordered document is not central to the present invention. The present invention operates on at least one properly programmed computer. The computer may be a stand alone or networked computer with local or remote memory and processing. The operating software may also vary provided that the computer is made to perform the following steps and functions as well as provide the following functionality. In addition, the present invention comprises interaction with a user which may also be facilitated by means known to one skilled in the art.

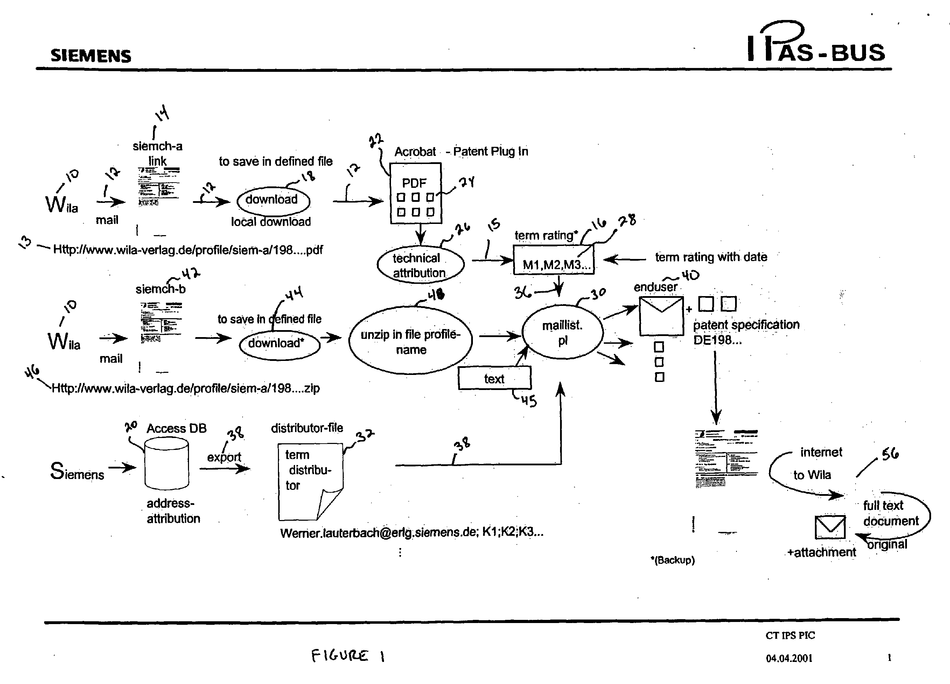

Figure 1 sets out a flow diagram of the present invention. Service 10 provides access to patent abstracts. In response to an order (placed by any appropriate means) an Internet link 13 to an ordered first document or patent abstract 14 is provided via e-mail 12 to a first user 16. Herein, an order is placed by an enduser 40 who may not necessarily be the first user. The link 13 is activated, and the patent abstract 14 is downloaded 18 and saved to a define file in a first remote database (not shown), a local database 20, or other location (not shown). Where the patent abstract is in ZIP format, a further step of unzipping the abstract is performed as part of the download. The download may be performed manually or automatically. A mask 22, depicted by way of example as being in the form of an ADOBE ACROBAT plug-in, is layered atop the patent abstract. The mask includes a plurality of boxes 24 which comprise links or address keys to predefined technical or legal attributes 26 of the patent abstract. By way of example, the technical attributes may comprise an international patent classification. The first document 14 with mask 22 is presented 15 to the first user 16.

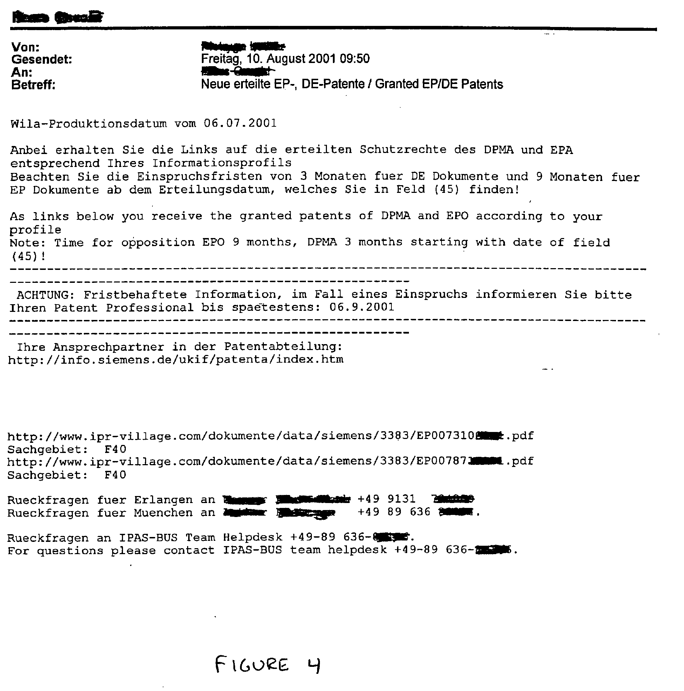

Figure 2 depicts the mask 22 applied to the first document 14. This is provided to the first user 16. The first user then selects or activates 28 boxes 24 corresponding to the patent abstract. The terms may further be rated in order of relevance, importance, and the like. A date is automatically assigned to the box selection or activation. The patent abstract with activated or selected box and date, or second document 32, is stored in first database (not shown), second database 20, local memory (not shown) or other location. The second document and first document are then made available (36, 38) to a mailing list 30 that may include an enduser 40 who may have ordered the patent abstract or first document, as well as others. The mailing list may be an e-mail mailing list (see Figure 4). The second document 32 may further include a figure 31 from the first document 14 as well as be in PDF format. The second document and subsequent second documents are stored in a location which may later be accessed and searched according to technical, legal, or other attributes. The later access to the second documents is facilitated by means known to one skilled in the art.

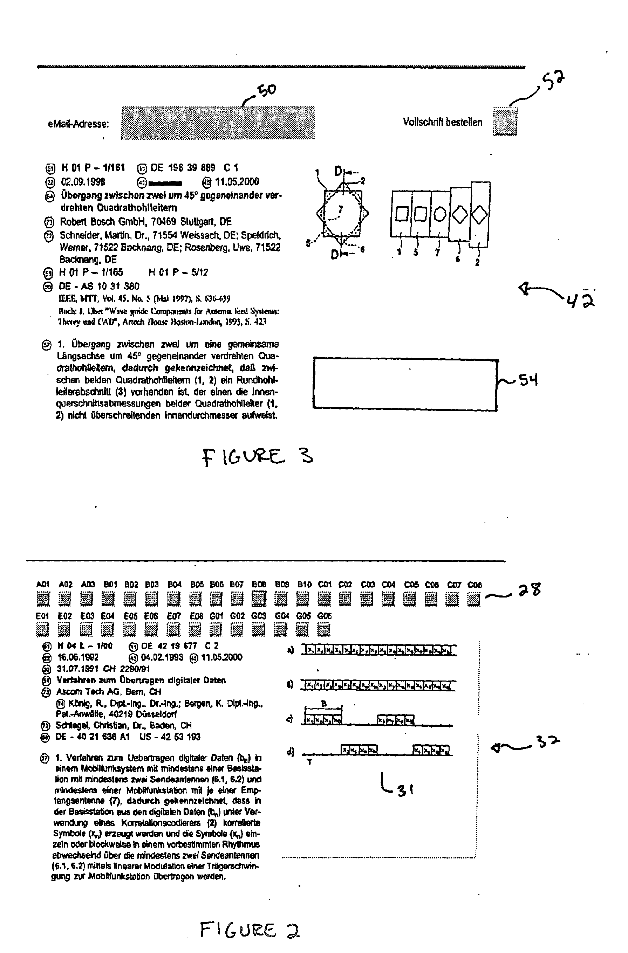

The above discussed patent abstract is downloaded again in a second format from the first document above. For clarity, this second formatted patent abstract will be referred to as the third document. The third document 42 is downloaded 44 via a link 46 provided by service 10. By way of example, the third document 42 is zipped, therefore, an unzipping of the third document 48 takes place. The step of unzipping may be automatically activated as part of the download 44. Figure 3 depicts the third document 42 unzipped. As shown, three fields are automatically added to the third document 42. A first field 50 provides for an e-mail address to which the third document 42 may be forwarded. A second field 52 provides for an ordering of the full text of patent to which the third document 42, being an abstract, relates to. A third field 54 is included for addition of comments which will be associated and saved with the third document in the first database (not shown), second database 20 or other location.

Returning to Figure 1, both the second document 32 and third documents 42 are made available to the enduser via a mailing list 30 or the like. The second and third documents may be forwarded by e-mail with text 45 added to it. Figure 4 depicts an example of such an e-mail. Herein the added text refers to legal deadlines associated with the particular document being forwarded. Names and other internal data have been redacted. The enduser 40, via fields provided in the third document 42, may order a full text of the third document (52, 56), forward it and/or comment.

The invention being thus described, it will be obvious that the same may be varied in many ways. For example, the classification may be performed by a key word search of the document, with a word count indicating a probability of association with a particular classification. Likewise, the arrangement of the mask on the first document may be rearranged to suit a design choice. Furthermore, the second and third documents may be forwarded as attachments to the e-mail, links or other. Such variations are not to be regarded as a departure from the spirit and scope of the invention, and all such modifications as would be obvious to one skilled in the art are intended to be included within the scope of the following claims.

## Claims

1. A method of grouping information, comprising the steps of:
- downloading (18) a first document (14);
- assigning (22) a plurality of address keys (24) to the first document (14);
- presenting (15) the first document (14) and address keys to a user (16);
- receiving an input from the user (36), the input indicating at least one address key (28);
- creating a second document (32), the second document (32) comprising the first document (14) and input (36).

2. The method according to claim 1, further comprising the step of downloading (18) the first document (14) from a first database and storing the second document (32) in the first database.

3. The method according to claims 1-2, further comprising the step of downloading (18) the first document (14) from a first database and storing the second document (32) in a second database (20).

4. The method according to claims 1-3, wherein the address keys (24, 28) indicate information relating to the first document (14), the information including one of technical (26) and legal classifications.

5. The method according to claims 1-4, wherein the first document (14) is created from a patent.

6. The method according to claims 1-5, wherein the second document (32) is in PDF format.

7. The method according to claims 1-6, wherein the first document (14) is downloaded (18) in zipped format, and further comprising the step of unzipping the first document (18).

8. The method according to claims 1-7, wherein the second document (32) includes a figure (31) from the first document (14).

9. The method according to claims 1-8, wherein the second document includes fields for: inputting data (54); routing the second document to a second user (50); and ordering additional information including a full text of the first document (52).
